# EUROPEAN PATENT APPLICATION

(11) **EP 1 501 261 A2**
(43) Date of publication of application: **26.01.2005**
(21) Application number: 04017122.5
(22) Date of filing: 20.07.2004
(51) Int. Cl.: H04M 1/02, H04M 1/03

(54) **Dual-speaker folder type portable terminal**

(30) Priority: 23.07.2003 KR 2003050660; 20.11.2003 KR 2003082780
(71) Applicant: Samsung Electronics Co., Ltd., Suwon-si, Gyeonggi-do (KR)
(72) Inventor: Chung, Jae-Woong, Yeongtong-gu Suwon-si Gyeonggi-do (KR); Jung, Kwang-Ho, Yeongtong-gu Suwon-si Gyeonggi-do (KR); Kim, Nam-Mi, Yeongtong-gu Suwon-si Gyeonggi-do (KR); Hwang, Chang-Hwan, Yeongtong-gu Suwon-si Gyeonggi-do (KR)
(74) Representative: Grünecker, Kinkeldey, Stockmair & Schwanhäusser Anwaltssozietät

(57) **Abstract**

A speaker-up type portable terminal provides ease of use. The speaker-up type portable terminal includes a phone body (10) having a display unit (110) mounted at a predetermined location thereof and a plurality of keys disposed adjacent to the display unit, a cover (20) coupled to the phone body by a hinge unit (101,212) which rotates to go away from or come towards the phone body while the cover faces the phone body, and closing or opening the display unit, a hinge axis running across an upper end of the phone body, a first speaker mounted on a top surface of the cover, and a second speaker (202) mounted on a bottom surface of the cover and disposed adjacent to the first speaker.

## Description

### BACKGROUND OF THE INVENTION

### 1. Field of the Invention

The present invention generally relates to a portable terminal such as a cellular phone, a PDA (Personal Digital Assistant), a HHP (Hand Held Phone) or the like, and more particularly to a speaker-up type portable terminal capable of providing ease of use.

### 2. Description of the Related Art

In general, "portable terminals" are electronic devices which a user can carry with him/her to perform wireless communication with a desired partner. In consideration of portability, design of the portable terminal has tended not only toward compactness, slimness and lightness, but also toward multimedia features capable of pursuing more various functions. The portable terminals may be used for more functions and purposes other than compactness and lightness, and they may be modified to be suitable for environments of various multimedia or internets. Additionally, the portable terminals may be used by men and women, young and old, anywhere in the world.

Conventional portable terminals may be classified into various types based on their appearance, such as bar-type portable terminals, flip-type portable terminals, and folder-type portable terminals. The bar-type portable terminal has a single housing shaped like a bar. The flip-type portable terminal has a flip which is pivotally mounted to a bar-shaped housing by a hinge unit. The folder-type portable terminal has a folder coupled to a single bar-shaped housing by a hinge unit, thus the folder can be rotated in order to be folded to or unfolded from the housing.

Furthermore, portable terminals may be classified as necklace-type terminals and wrist-type terminals, based on the position at or a way in which a user puts it on the terminal. The necklace-type terminal is one which the user wears around the neck using a string, while the wrist-type terminal is one which is worn around the wrist of the user.

Additionally, portable terminals may be classified as rotation-type terminals and sliding-type terminals based on ways of opening and closing the terminals. In the rotation-type portable terminal, two housings are coupled to each other in a manner that one housing rotates to be opened or closed relative to the other while facing each other. In the sliding-type portable terminal, two housings are coupled to each other in a manner that one housing slides to be opened or closed relative to the other. The above described various types of portable terminals are easily known by those skilled in the art.

Furthermore, the conventional portable terminals described above have been designed to enable a voice communication as well as a high-speed data communication. As consumer demands have been increased, various services have been provided using wireless communication technology for transceiving data at a high speed.

A camera lens may be mounted to the portable terminal. Thus the portable terminal can transmit image signals.

Commonly, the portable terminals are provided with an embedded or external camera lens module. Therefore, the user can perform an image communication with a desired partner or photograph a desired subject.

However, among the conventional portable terminals, the folder-type portable terminal has a disadvantage in that the folder must be opened to check data which have been received or will be transmitted. Furthermore, the bar-type portable terminal has a disadvantage in that the display unit may be broken or scratched in absence of means for protecting the display unit.

Further, in order to open/close a flip cover or folder from/onto a conventional flip-type/folder-type portable terminal, a user cannot easily catch and rotate the flip cover or folder by his or her own hand. Moreover, the user must repetitiously rotate the flip cover or folder when opening or closing the flip cover. Therefore, the user may feel inconvenienced by repeating such a monotonous routine.

### SUMMARY OF THE INVENTION

Accordingly, the present invention has been made to solve the above-described problems occurring in the prior art, and an object of the present invention is to provide a speaker-up type portable terminal, in which at least one speaker is exposed outside.

It is another object of the present invention to provide a portable terminal, which uses the advantages of folder-type and bar-type portable terminals.

It is yet another object of the present invention to provide a portable terminal, which is provided with an opening having a predetermined shape, a first speaker for a speaker phone, and a second speaker for a receiver, thereby providing ease of use.

It is yet still another object of the present invention to provide a portable terminal, enabling various data requiring frequent checking to be easily checked without opening a cover.

It is yet still another object of the present invention to provide a portable terminal and its cover-opening assembly, which enables a cover of the portable terminal to be automatically opened by pressing a push button provided at the portable terminal, thus it is convenient to use the portable terminal.

In order to accomplish these objects, there is provided a portable terminal with the features of claim 1. Advantagious embodiments are disclosed by the sub claims.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view of a portable terminal according to a preferred embodiment of the present invention, in which a cover of the portable terminal is closed;
FIG. 2 is a front view of the portable terminal shown in FIG. 1;
FIG. 3 is a perspective view of a portable terminal according to a preferred embodiment of the present invention, in which a cover of the portable terminal is opened;
FIG. 4 is a front view of the portable terminal shown in FIG. 3; and
FIG. 5 is a front view illustrating a cover of a portable terminal according to a preferred embodiment of the present invention.
FIG. 6 is an exploded perspective view of a cover-opening assembly of a portable terminal according to a second preferred embodiment of the present invention;
FIG. 7 is an exploded perspective view of a first and second hinge shaft and a spiral spring in the cover-opening assembly illustrated in FIG. 6;
FIGs. 8 and 9 are assembled perspective views of the cover-opening assembly shown in FIG. 6, for illustrating the operation of the cover-opening assembly;
FIG. 10 is a transverse cross-sectional view of a portion of a portable terminal employing the cover-opening assembly illustrated in FIG. 6, when a cover of the portable terminal is closed;

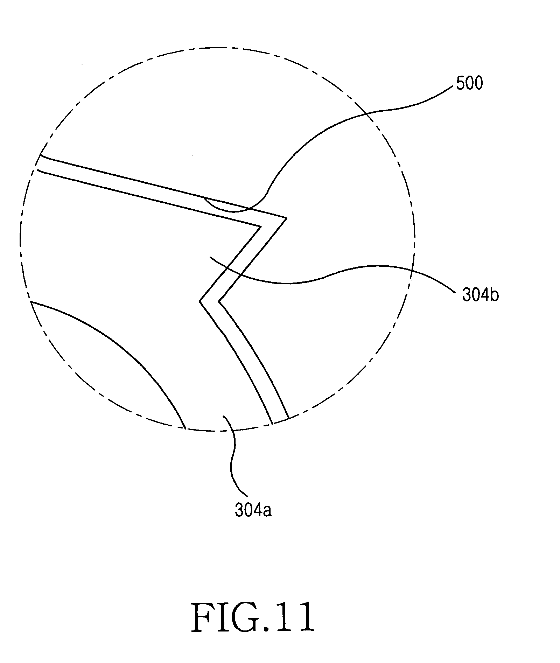

FIG. 11 is an enlarged sectional view of the encircled portion A in FIG 10;
FIG. 12 is an enlarged sectional view of the encircled portion B in FIG 10;
FIG. 13 is a longitudinal cross-sectional view of a portion of a portable terminal employing the cover-opening assembly illustrated in FIG. 6, for illustrating the operation of the cover-opening assembly;
FIG. 14 is an enlarged cross-sectional view of the encircled portion C in FIG. 13; and
FIG. 15 is a transverse cross-sectional view of a portion of a portable terminal employing the cover-opening assembly shown in FIG. 6, when a cover of the portable terminal is open.

### DETAILED DESCRIPTION OF THE PREFERRED EMBODIMENT

Hereinafter, a preferred embodiment of the present invention will be described in detail with reference to the accompanying drawings. In the drawings, the same or similar elements are denoted by the same reference numerals even though they are depicted in different drawings. In the following description of the present invention, a detailed description of known functions and configurations incorporated herein will be omitted for clarity where they are well-known in the art.

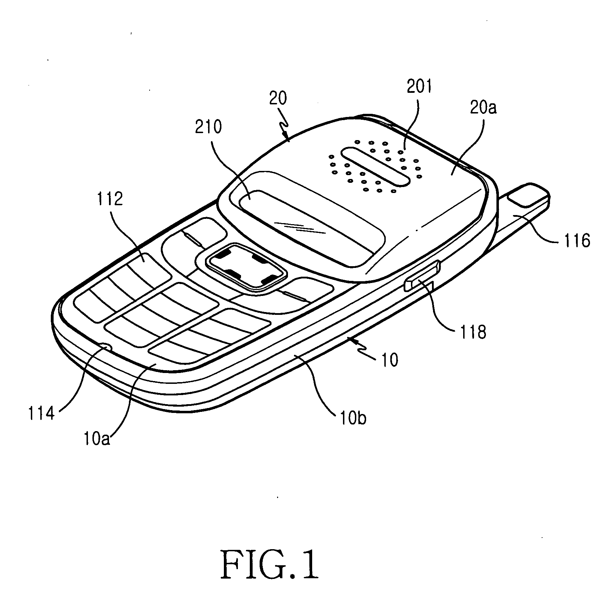

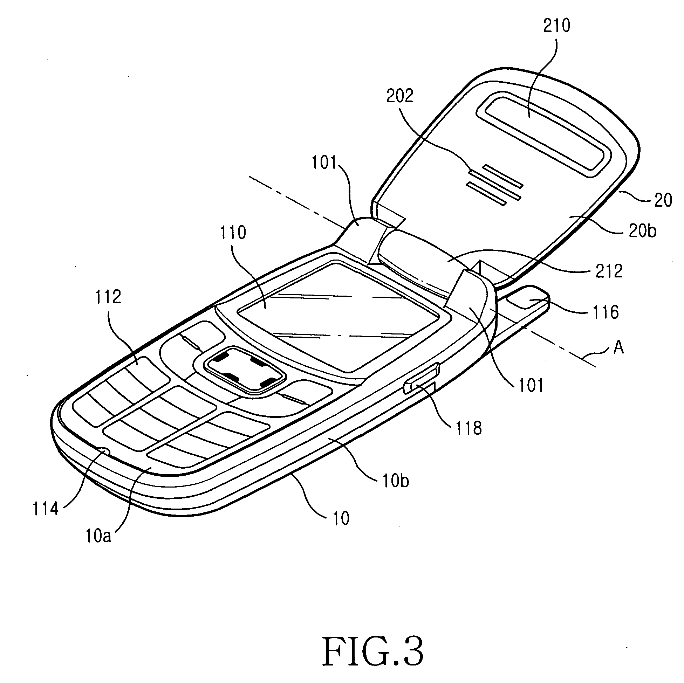

As illustrated in FIGs. 1 to 4, a portable terminal according to a preferred embodiment of the present invention uses the advantages of bar-type and folder-type portable terminals. Thus, a display unit 110 (shown in FIG. 3) can be protected under the closure of a cover 20, and various data requiring frequent checking can be checked. An operation mode of a speaker can be converted according to opening and closing of the cover 20. Furthermore, the portable terminal according to the preferred embodiment of the present invention is a speaker-up portable terminal enabling a speaker to be exposed outside.

The portable terminal according to the preferred embodiment of the present invention includes a phone body 10, the cover 20 rotatably coupled to the phone body 10, a first speaker 201 mounted on a top surface 20a of the cover 20, a second speaker 202 mounted on a bottom surface 20b of the cover 20 (shown in FIG. 3), and an opening 210 formed at a predetermined location of the cover 20.

As illustrated in FIG. 3, the phone body 10 includes a pair of side hinge arms 101, which protrude from one end of the phone body 10 in a vertical direction. Furthermore, the phone body 10 includes the display unit 110 disposed adjacent to the pair of side hinge arms 101, a plurality of keys 112 and a microphone 114. The display unit 110 is disposed adjacent to the keys 112. The keys 112 are disposed adjacent to the microphone 114. Of a pair of lateral surfaces of the phone body 10, one 10b is provided with at least one key 118. An antenna 116 extends from the phone body 10 in a longitudinal direction.

The cover 20 has top and bottom surfaces 20a and 20b, and a center hinge arm 212 coupled between the pair of side hinge arms 101. When the center hinge arm 212 is aligned with the pair of side hinge arms 101, a hinge axis A is formed. The first speaker 201 is exposed toward the top surface 20a of the cover 20, while the second speaker 202 is exposed toward the bottom surface 20b of the cover 20. The first speaker 201 is used for a speaker phone, and the second speaker 202 is used for a receiver.

The opening 210 extends parallel to the hinge axis A to be formed preferably in an elongated shape. Through the opening 210, the display unit 110 is partially exposed. When the cover 20 is closed relative to the phone body 10, the opening 210 enables a part of the display unit 110 to be exposed. Therefore, a user of the portable terminal can check data displayed on the part of the display unit 110 exposed through the opening 210. The opening 210 is located farther from the hinge axis A than is the first speaker 201. The opening 210 is formed as a predetermined shape of hole passing through the cover 20, so that the top and bottom surfaces 20a and 20b of the cover 20 function as an opened end surface.

The exposed part of the display unit 110 is located at a key-side region, where various data such as sensitivity of the antenna, time, date, power of the battery are displayed. The displayed data refer to ones requiring frequent checking by the user of the portable terminal. A known LCD (Liquid Crystal Display) module may be employed as the display unit.

According to the preferred embodiment of the present invention, the opening 210 of the cover 20 does not need to be disposed parallel to the hinge axis A. If various data requiring frequent checking should be displayed on a hinge axis-side section of the display unit 110, the opening 210 may be formed at a position adjacent to the hinge axis A. The opening 210 may be formed at a location at which various data requiring frequent checking are displayed on the display unit 110. The opening 210 may be formed parallel or perpendicular to the hinge axis A according to the displayed location of the data requiring frequent checking.

Additionally, the opening 210 may include window, and preferably a transparent window.

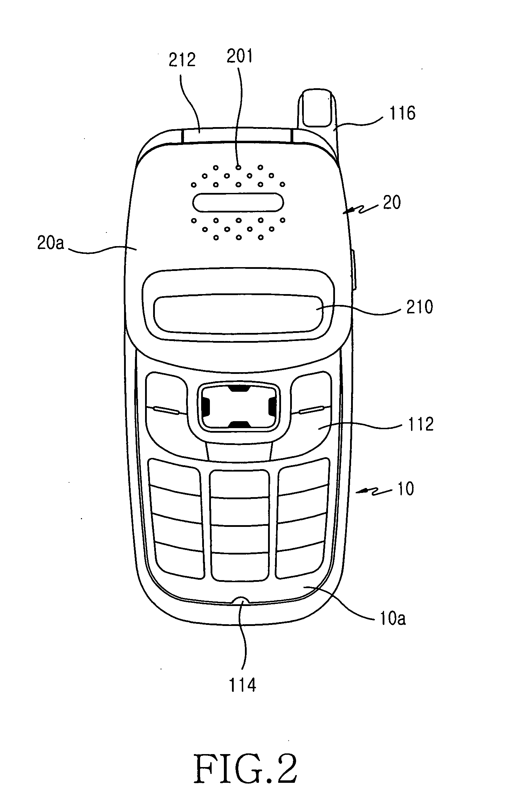

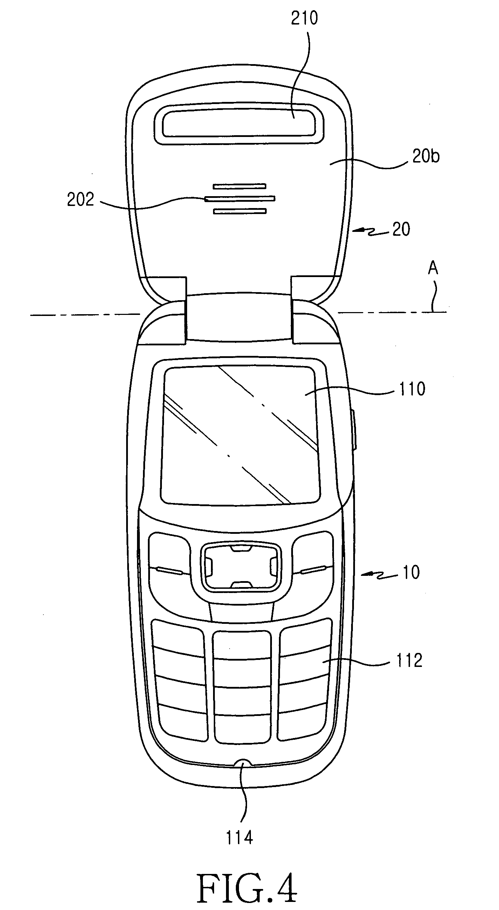

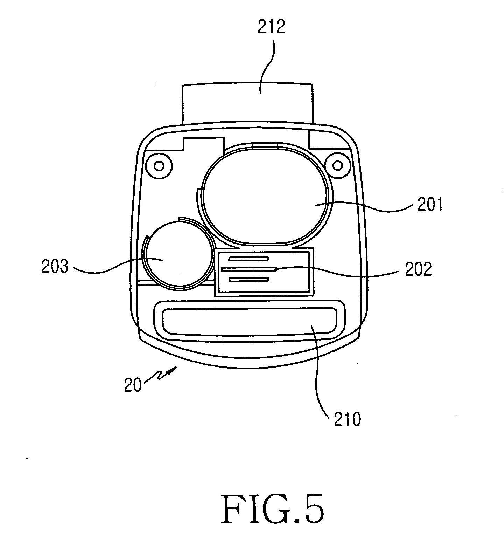

As illustrated in FIG. 5, the cover 20 includes a vibrator 203. The vibrator 203 is disposed adjacent to the first and second speakers 201 and 202 as well as the opening 210. The first and second speakers 201 and 202 and the vibrator 203 are electrically connected to the phone body 10 preferably using an FPCB (Flexible Printed Circuit Board) (not shown). The FPCB is connected to the phone body by the hinge axis A.
As illustrated in FIGs. 1 and 2, when the cover 20 is closed relative to the phone body 10, the opening 210 is located nearest to the keys 112. As illustrated in FIGs. 3 and 4, when the cover 20 is opened relative to the phone body 10, the opening 210 is located farthest from the keys 112.

Furthermore, as illustrated in FIGs. 1 and 2, the first speaker 201 is used as a speaker phone, while as illustrated in FIGs. 3 and 4, the second speaker 202 is used as a receiver. When the cover 20 is closed, the first speaker 201 is in an operation mode as the speaker phone. When the cover 20 is opened, the second speaker 202 is in an operation mode as the receiver. Either the first or second speaker 201, 202 is automatically operated as the speaker phone or the receiver according to whether the cover is closed or opened, respectively.

As described above, the portable terminal of the preferred embodiment of the present invention is a device which uses the advantages of folder-type and bar-type portable terminals, and is provided with the opening having the predetermined shape, the first speaker for the speaker phone, the second speaker for the receiver, thereby providing ease of use.

Hereinafter, a second preferred embodiment of the present invention will be described with reference to the accompanying drawings.

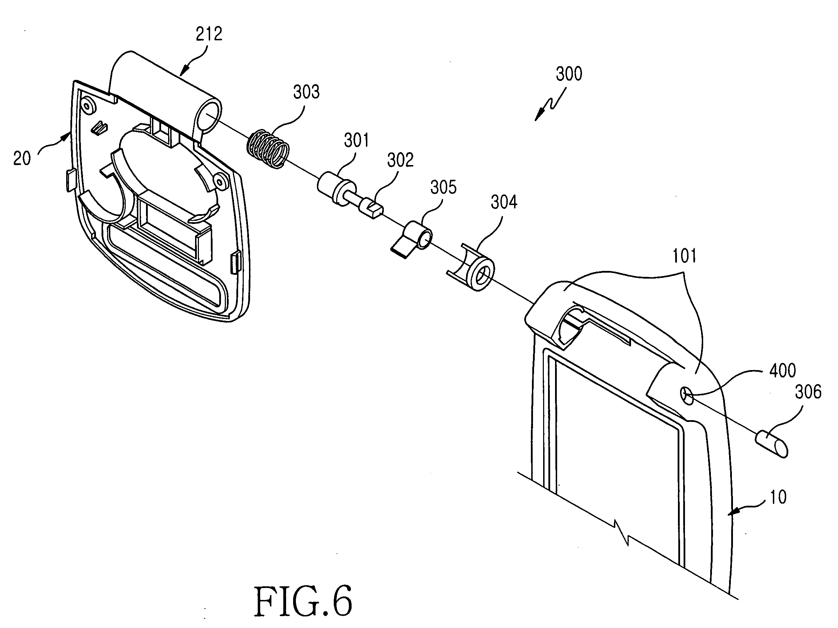

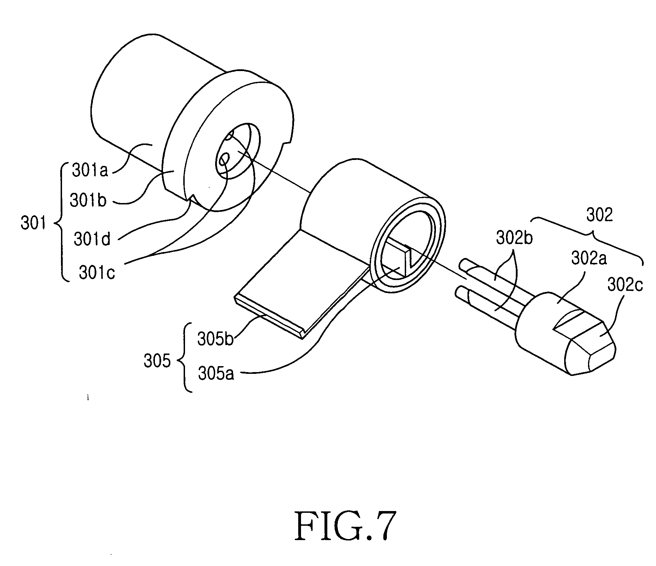

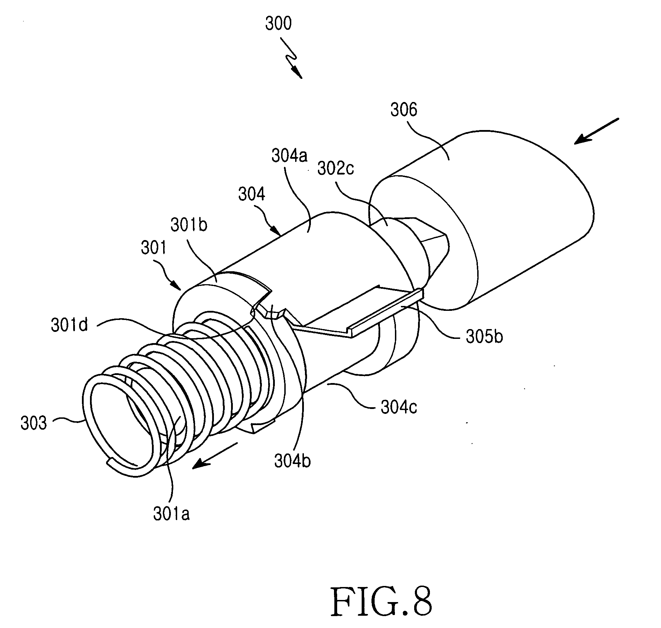

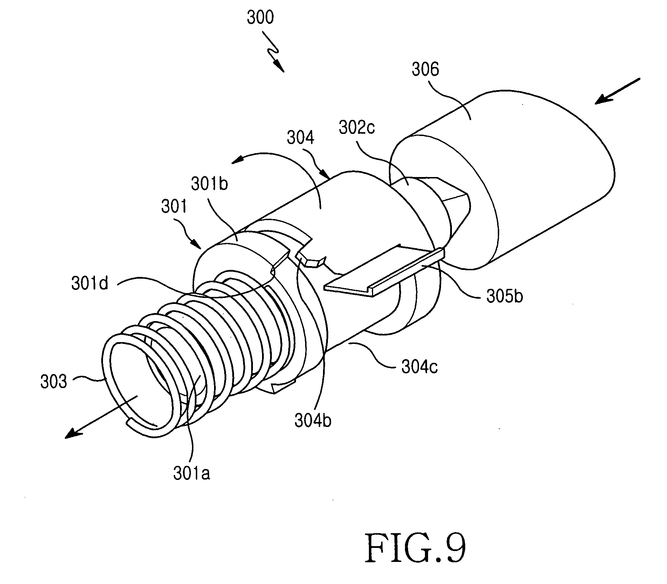

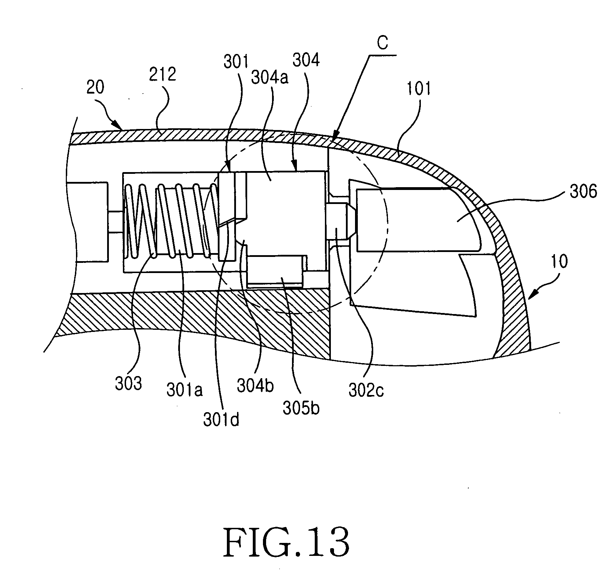

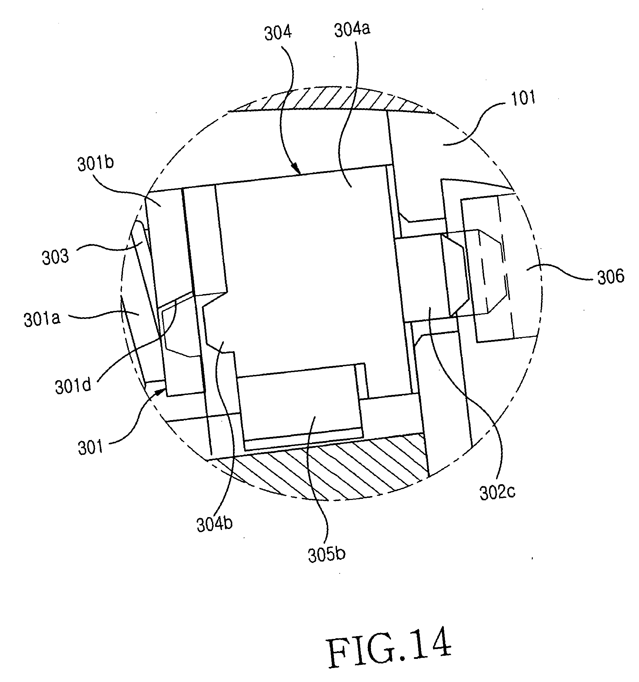

As illustrated in FIGs. 6 and 7, a cover-opening assembly 300 of a portable terminal includes a first hinge shaft 301, a second hinge shaft 302, a compression coil spring 303, a locking cap 304, a spiral spring 305, and a push button 306. While using the portable terminal having the cover-opening assembly 300 as described above, a user may press the push button 306 provided at one of the side hinge arms 101 as shown in FIGs. 8 and 9. Then, the push button 306 is pushed into a button hole 400 formed through one of the side hinge arms 101.
Then, as illustrated in FIGs. 13 and 14, the push button 306 comes into contact with a contact head 302c of the second hinge shaft 302 and moves the second hinge shaft 302 inward the portable terminal, which is, toward the first hinge shaft 301 or leftward in the drawings.

Referring to FIG. 7, the second hinge shaft 302 has a pair of legs 302b protruding longitudinally from an end of a shaft body 302a, which are fixedly inserted in leg holes 301c formed at an end of the first hinge shaft 301. Accordingly, when the second hinge shaft 302 is pushed toward the first hinge shaft 301, the first hinge shaft 301 is moved inward together with the second hinge shaft 302. A cam shoulder 301d formed at a shaft cam 301b of the first hinge shaft 301 and a locking stopper 304b formed at the locking cap 304, which have been engaged with each other, are disengaged from each other as illustrated in FIG. 13.

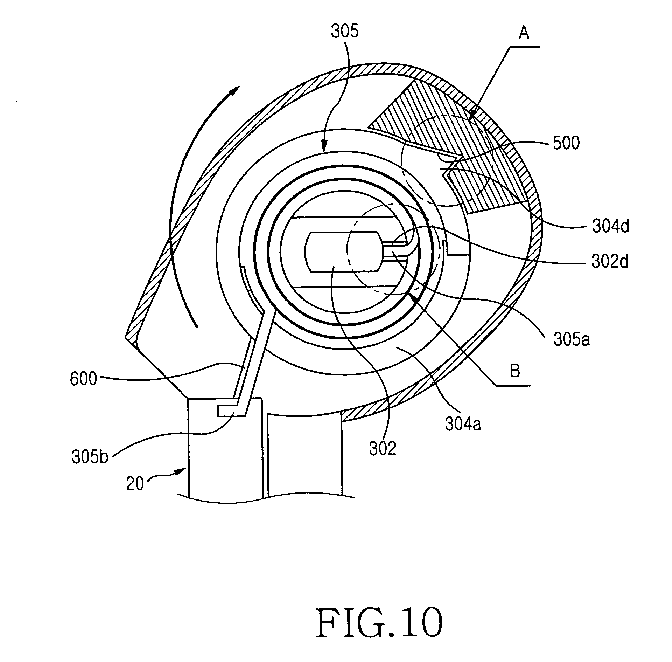

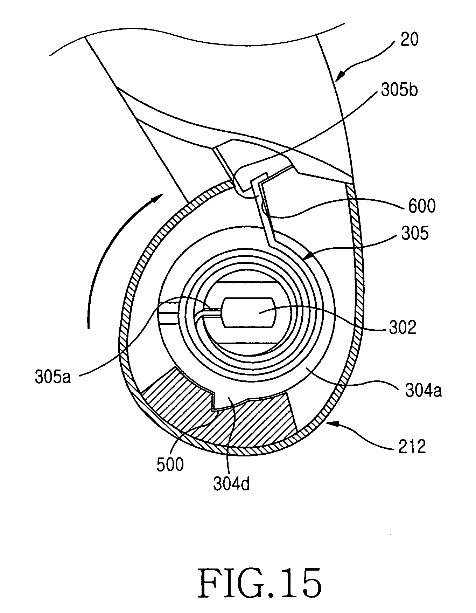

As illustrated in FIGs. 10 and 15, the cover 20 is automatically rotated by the elastic force of the spiral spring 305 housed in the locking cap 304 and is thus opened from the phone body 10. Herein, the locking cap 304 has a cap housing 304a shaped like a cylinder, through which the shaft body 302a is inserted.

Referring to FIG. 10, the cap housing 304a has an engagement protuberance 304d protruding outward from a predetermined portion of the cap housing 304a, which is engaged with an engagement groove 500 formed on an inner surface of the center hinge arm 212 (illustrated in FIG. 6). As a result, a rotation of the cap housing 304a enables a simultaneous and following rotation of the center hinge arm 212.

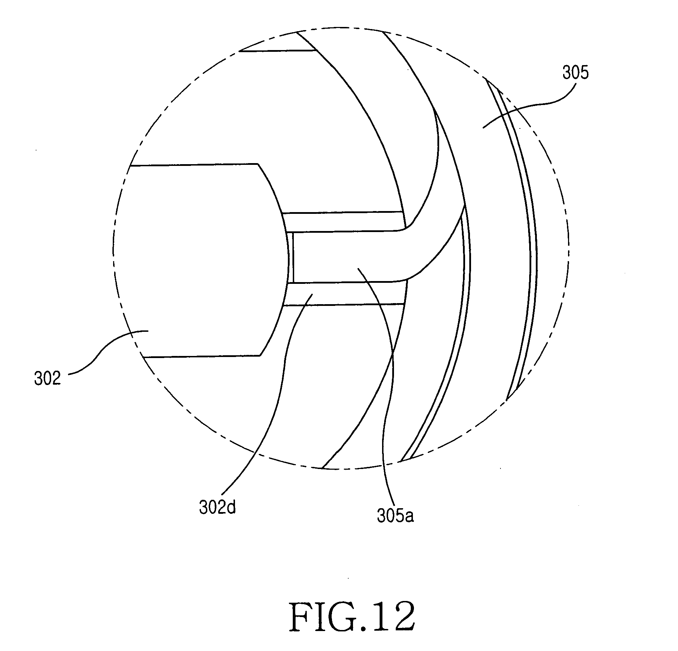

Referring to FIGs. 10, 12, and 15, an inner end 305a of the spiral spring 305 is inserted and fixed in a holding groove 302d formed at the second hinge shaft 302. Further, an outer end 305b of the spiral spring 305 is inserted through a cap opening 304c (illustrated in FIG. 8) of the locking cap 304 and a spring-holding hole 600 formed at the center hinge arm 212. The outer end 305b of the spiral spring 305 is engaged with and held by an end portion forming the spring-holding hole 600. Accordingly, as described above, the cover 20 is automatically opened when the push button 306 is pressed.

The opened cover 20 can be manually closed. When a user manually rotates the cover 20 toward the phone body 10, the locking cap 304 also rotates following the rotation of the cover 20. When the locking stopper 304b of the locking cap 304 is engaged with the cam shoulder 301d of the shaft cam 301b during the rotation of the locking cap 304, the cover 20 is held in the closed position.

Herein, the compression coil spring 303 provided around a shank 301a of the first hinge shaft 301 and disposed at one side of the shaft cam 301b elastically pushes the shaft cam 301b outward while enabling the first hinge shaft 301 to move either inward or outward. Therefore, the elastic force of the compression coil spring 303 pushing the shaft cam 301b enables the cam shoulder 301d to be moved outward and engaged with the locking stopper 304b while the locking cap 304 rotates.

Referring again to FIGs. 13 and 14, the first hinge shaft 301 has the shank 301a formed integrally behind the shaft cam 301b, and the compression coil spring 303 is fitted around the shank 301a.

While the present invention has been shown and described with reference to certain preferred embodiments thereof, it will be understood by those skilled in the art that various changes in form and details may be made therein without departing from the spirit and scope of the invention as defined by the appended claims.

## Claims

1. A portable terminal comprising:
a phone body (10) having a display unit (110) mounted at a predetermined location thereof and a plurality of keys (212) disposed adjacent to the display unit;
a cover (20) coupled to the phone body by a hinge unit (101, 212) which rotates along a hinge axis (A) away from or towards the phone body while the cover faces the phone body, and closing or opening the display unit;
a first speaker (201) mounted on a top surface (20a) of the cover (20), and
a second speaker (202) mounted on a bottom surface (20b) of the cover.

2. The portable terminal according to claim 1, wherein the second speaker (202) is disposed adjacent to the first speaker (201).

3. The portable terminal according to claims 1 or 2, wherein the phone body (10) further comprises a microphone (114) disposed adjacent to the keys ( 112).

4. The portable terminal according to one of the previous claims, wherein the portable terminal further comprises an opening (210), which extends parallel to the hinge axis (A) and is disposed farther from the hinge axis than is first speaker (201).

5. The portable terminal according to one of the previous claims, wherein the cover (20) further comprises a vibrator (203) located adjacent to the first (201) and second (202) speakers and the opening (210).

6. The portable terminal according to one of the previous claims, wherein the display unit (110) has a predetermined part located adjacent to the keys (112).

7. The portable terminal as claimed in claim 6, wherein the predetermined part of the display unit (110) displays data requiring frequent checking.

8. The portable terminal according to one of the previous claims, wherein the first speaker (201) is used as a speaker phone and the second speaker (202) is used as a receiver.

9. The portable terminal according to claim 1, wherein the cover (20) further comprises an opening (210) which is formed at a predetermined location to check data displayed on a predetermined part of the display unit (110) when the cover is closed onto the phone body (10).

10. The portable terminal according to one of the previous claims, wherein the hinge axis (A) extends through an upper end of the phone body.

11. The portable terminal according to one of the previous claims, wherein a cover-opening assembly (300) is disposed in the hinge unit (101, 212) for enabling the cover (20) to be automatically opened from the phone body (10).

12. The portable terminal according to claim 11, wherein the hinge unit comprises:
a pair of side hinge arms (101) formed integrally with the phone body (10), and a center hinge arm (212) formed integrally with the cover (20), wherein the side hinge arms are separate from and opposed to each other, and the center hinge arm is disposed between the side hinge arms.

13. The portable terminal according to claim 11 or 12, wherein the cover-opening assembly (300) comprises:
a first hinge shaft (301) disposed in the center hinge arm (212) of the hinge unit;
a second hinge shaft (302) assembled with the first hinge shaft (301);
a compression coil spring (303) assembled with a first side of the first hinge shaft (301) for elastically supporting the first and second hinge shaft while enabling the first and second hinge shafts to move inward and outward of the portable terminal in a longitudinal direction of first and second hinge shafts;
a locking cap (304) assembled with a second side of the first hinge shaft (301) opposite to the first side, a second hinge shaft (302) being inserted through the locking cap (304), the locking cap being engaged with and disengaged from a cam shoulder (301d) of the first hinge shaft (301) and rotating together with the cover (20) according to longitudinal movement of the first and second hinge shafts;
a spiral spring (305) disposed in the locking cap (304) for providing an elastic force, which enables the cover (20) to automatically rotate, and
a push button (306) provided at one of the side hinge arms (101) to provide an external force for moving the first and second hinge shafts (301, 302) thereby pushing the second hinge shaft when the push button is pressed.

14. The portable terminal according to claim 13, wherein the cover-opening assembly (300) is disposed in a button hole (400) formed at the side hinge arm (101) of the hinge unit.

15. The portable terminal according to claim 13 or 14, wherein the first hinge shaft (301) comprises:
a shank (301a) assembled with the compression coil spring (303), and a shaft cam (301b) formed at one end of the shank and having the cam shoulder (301d) for engaging with and disengaging from the locking cap (304), wherein the shank (301a) has at least one leg hole (301c) extending in a longitudinal direction of the shank, in which a leg (302b) of the second hinge shaft (302) is fixedly inserted.

16. The portable terminal according to one of the claims 13 to 15, wherein the second hinge shaft (302) comprises:
a shaft body (302a) inserted into and attached to the spiral spring (305);
at least one leg (302b) extending longitudinally from a first end of the shaft body and being fixedly inserted in a leg hole (301c) of the first hinge shaft (301), and
a contact head (302c) formed at a second end of the shaft body opposite to the first end and protruding out of the center hinge arm (212) in contact with a push button (306), wherein the shaft body (302a) includes a holding groove (302d) in which an inner end (305a) of the spiral spring (305) is fixedly inserted.

17. The portable terminal according to one of the claims 13 to 16, wherein the locking cap (304) comprises:
the cap housing (304a) shaped as a hollow cylinder, through which a shaft body (302a) is inserted, a locking stopper (304b) protruding from a portion of the circumference of the cap housing in a longitudinal direction of the cap housing, for engaging with and disengaging from the cam shoulder (301d) of the first hinge shaft (301), and
an engagement protuberance (304d) protruding outward from a portion of an outer surface of the cap housing (304a), the engagement protuberance being engaged with an engagement groove (500) formed on an inner surface of the center hinge arm (212) in such a manner that the center hinge arm rotates following a rotation of the cap housing, wherein the cap housing (304a) includes a cap opening (304c) formed by eliminating an area of the cap housing, and an outer end (305b) of the spiral spring (305) is inserted through and engaged with the cap opening.

18. A portable terminal according to claim 13, wherein an inner end (305a) of the spiral spring (305) is inserted and fixed in a holding groove (302d) of the second hinge shaft (302), and an outer end (305b) of the spiral spring (305) is inserted through a cap opening (304c) of the locking cap (304) and held in a spring-holding hole (600).
